Europäisches Patentamt

European Patent Office

Office européen des brevets

(11) Veröffentlichungsnummer: **0 390 950 B1**

(12) **EUROPÄISCHE PATENTSCHRIFT**

(45) Veröffentlichungstag der Patentschrift: **13.01.93**

(21) Anmeldenummer: **89106087.3**

(22) Anmeldetag: **06.04.89**

(51) Int. Cl.⁵: **G01N 23/04**, G01V 5/00

(54) **Materialprüfanlage.**

(43) Veröffentlichungstag der Anmeldung:
**10.10.90 Patentblatt 90/41**

(45) Bekanntmachung des Hinweises auf die
Patenterteilung:
**13.01.93 Patentblatt 93/02**

(84) Benannte Vertragsstaaten:
**DE FR GB**

(56) Entgegenhaltungen:
**EP-A- 0 198 276**
**US-A- 4 029 963**

**JOURNAL OF TESTING AND EVALUATION,**
**Band 13, Nr. 3, May 1985, Seiten 211-216,**
**Philadelphia, PA, US; F.L. RODER:**
**"Principles, history, and status of dual-**
**energy computerized tomographic explosi-**
**ves detection"**

**PATENT ABSTRACTS OF JAPAN, Band 7, Nr.**
**241 (P-232)[1386], 26. Oktober 1983;& JP-A-58**
**127 153**

**PHILIPS TECHNICAL REVIEW, Band 42, Nr.**
**8/9, Juni 1986, Seiten 274-285, Eindhoven, NL;**
**J.J.H. COUMANS: "Dual-energy X-ray diagno-**
**stics"**

**"Colour Television", P.S. Carnt and G.B.**
**Townsend, London Iliffe Books Ltd., 1961,**
**Seite 366**

(73) Patentinhaber: **Heimann Systems GmbH & Co.**
**KG**
**Weher Köppel 6**
**W-6200 Wiesbaden(DE)**

(72) Erfinder: **Dönges, Gerhard, Dipl.-Ing.**
**Am Markt 1**
**W-6209 Heidenrod 1(DE)**

(74) Vertreter: **Fuchs, Franz-Josef, Dr.-Ing. et al**
**Postfach 22 13 17**
**W-8000 München 22(DE)**

## Beschreibung

Die Erfindung betrifft eine Materialprüfanlage gemäß dem ersten Teil des Patentanspruches 1. Eine solche Materialprüfanlage ist in der EP-A-0 198 276 beschrieben.

In der medizinischen Röntgentechnik ist das Mehrenergieverfahren bekannt, bei dem die Eigenschaft der chemischen Elemente benutzt wird, einen von der Ordnungszahl und der Strahlenenergie abhängigen Massenschwächungskoeffizienten zu besitzen.

Durch Vergleich mindestens zweier deckungsgleicher Röntgenbilder bei unterschiedlichen Energieniveaus ist es möglich, z.B. Weichteile (Elemente niedriger Ordnungszahl) von Knochen (Elemente höherer Ordnungszahl) zu unterscheiden.

In der US-A-4 029 963 ist eine medizinische Diagnostikanlage beschrieben, bei der Röntgenstrahlung niedriger und hoher Energie zur Röntgenbilderzeugung benutzt wird, wobei das Röntgenbild auch farbig dargestellt werden kann.

Der Erfindung liegt die Aufgabe zugrunde, eine Materialprüfanlage gemäß dem ersten Teil des Patentanspruches 1 so auszubilden, daß alle Informationen, die das bildgebende System liefert, in optimaler Weise dem auswertenden Bediener für die Kontrolle von Gepäck bzw. Material zur Verfügung gestellt werden.

Bei der Lösung dieser Aufgabe ist von der Erkenntnis ausgegangen, daß das in der medizinischen Röntgentechnik bekannte Mehrenergieverfahren unter Anpassung an die Erfordernisse der Materialprüfung geeignet ist.

Die Aufgabe ist demgemäß erfindungsgemäß durch die Materialprüfanlage mit den in Anspruch 1 aufgeführten Merkmalen gelöst. Bei der vorliegenden Erfindung ist das von der medizinischen Röntgentechnik bekannte Verfahren zur Durchstrahlung eines Objektes mit unterschiedlichen Strahlenenergien an die Erfordernisse der Materialprüfung angepaßt. Es ist dabei möglich, organisches Material wie Drogen und Sprengstoffe deutlich von anderen Materialien, z.B. Metallen (Waffen), zu unterscheiden.

Die Erfindung ist nachfolgend anhand eines in der Zeichnung dargestellten Ausführungsbeispieles näher erläutert. Es zeigen:

Fig. 1        eine Materialprüfanlage nach der Erfindung, und

Fig. 2 bis 5    Kurven zur Erläuterung der Wirkungsweise der Fig. 1.

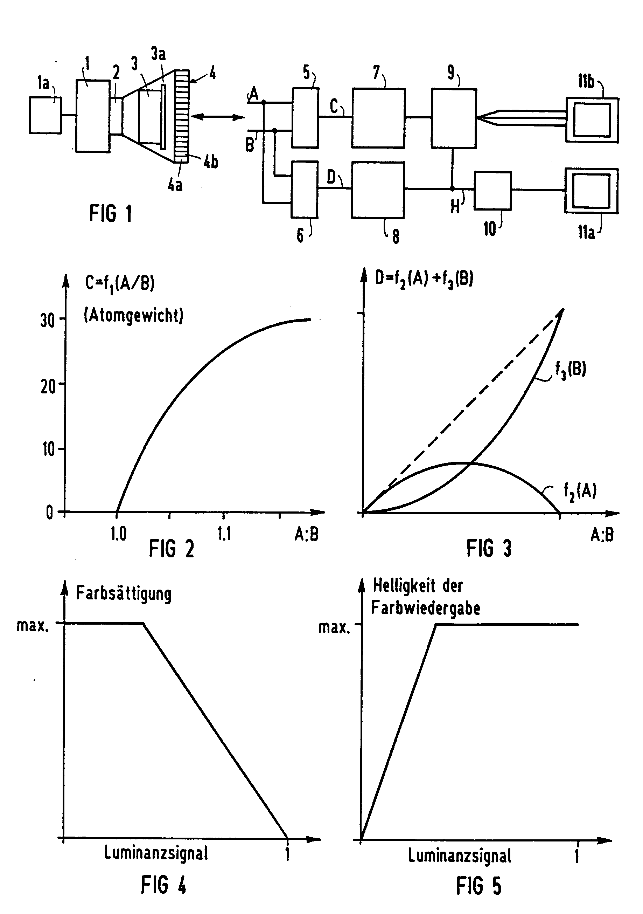

In der Fig. 1 ist ein von einem Röntgengenerator 1a gespeister Röntgenstrahler 1 mit einer Primärstrahlenblende 2 dargestellt, der ein fächerförmiges Röntgenstrahlenbündel aussendet, das Prüfgut 3 auf einer Transportstrecke 3a durchstrahlt.

Die Transportrichtung verläuft dabei senkrecht zur Zeichenebene. Das aus dem Prüfgut austretende Röntgenstrahlenbündel trifft auf einem Strahlendetektor 4 auf, der von einer Reihe von Einzeldetektoren 4a, 4b usw. gebildet ist. Die Ausgangssignale des Strahlendetektors 4, nämlich der Einzeldetektoren 4a, 4b usw., werden den beiden Kanälen A und B einer Signalverarbeitungsschaltung mit zwei Rechenwerken 5, 6, zwei Flächenfiltern 7, 8, einer Farbzuordnertabelle 9, einer Fernsehzentrale 10 und zwei Monitoren 11a, 11b zugeführt. Der Monitor 11a ist ein Schwarzweißmonitor und der Monitor 11b ein Farbmonitor für die Farben rot, gelb, blau.

Das Prüfgut 3 wird aufeinanderfolgend mit zwei unterschiedlichen Strahlenenergien durchstrahlt. Hierzu wird beispielsweise die Röntgenröhrenspannung mit Hilfe des Röntgengenerators 1a umgeschaltet.

Das Rechenwerk 5 dient zur Gewinnung der Materialinformation C in codierter und digitalisierter Form aus den Bildsignalen der Kanäle A und B entsprechend der Funktion $f_1$:

$$C = f_1 \ (A/B)$$

in Fig. 2. Das Rechenwerk 6 dient zur Bewertung und Summation der Bildsignale der Kanäle A und B zur Gewinnung des Summenluminanzsignales D entsprechend den Funktionen $f_2$ und $f_3$:

$$D = f_2 \ (A) \ + \ f_3 \ (B) \ \text{in Fig. 3.}$$

Das Flächenfilter 7 ist ein FIR-Flächenfilter (FIR = finite impulse response) zur Rauschreduktion. Das Flächenfilter 8 ist ein FIR-Flächenfilter zur Konturenverstärkung. Das Ausgangssignal H ist die verbesserte Luminanzinformation zur Steuerung eines Schwarzweißmonitors.

Die helligkeitssteuerbare Farbzuordnertabelle 9 besitzt Farbausgänge Rot, Grün und Blau zur Steuerung eines Farbmonitors.

Beschreibung der Funktion:

Zwei Bildsignale auf den Kanälen A und B deckungsgleicher Bildpunkte mit spektral unterschiedlicher Information (A: höherenergetisch, B: niederenergetisch) gelangen in digitalisierter Form zu den Rechenwerken 5 und 6.

Das Rechenwerk 5 verknüpft die Signale auf den Kanälen A und B so, daß abhängig vom Quotienten A/B am Ausgang die Amplitude des Signales C ein Maß für die Abweichung von A und B ist. Bei kleinen Unterschieden von A und B liegt eine geringe Spektralabhängigkeit des Massenschwächungskoeffizienten K des Stoffes vor. Es handelt sich dann um einen Stoff niedrigen Atomgewichtes. Je höher das Atomgewicht des durchdrungenen Stoffes ist, desto größer ist der Quotient A/B.

$C = f_1 (A/B)$

Das Signal C stellt also die Materialinformation, d.h. das Atomgewicht, in codierter Form dar (Fig. 2).

Das Rechenwerk 6 verknüpft A und B so, daß ein Bildsignal D entsteht, das die Information von A und B vereinigt. Im Amplitudenbereich geringer Signalschwachung werden vorwiegend die niederenergetischen Anteile aus A genutzt; mit kleineren Amplituden werden zunehmend mehr Anteile höherenergetischer Strahlung aus B übernommen. Für das Summensignal gilt

$$D = f_2 (A) + f_3 (B).$$

Das Signal D wird im folgenden Luminanzsignal genannt, weil es die optimierte Grauwertinformation enthält (Fig. 3). Der Vorteil der hier vorgenommenen Verrechnung ist, daß jeweils das Signal mit dem maximalen Signal-Rauschabstand zur Luminanzsignalgewinnung herangezogen wird.

Luminanzsignal und codierte Materialinformation werden beide gefiltert. Die Filtercharakteristik ist unterschiedlich:

Das Luminanzsignal wird zur Verstärkung der Konturen in bekannter Weise einer Kantenanhebung unterzogen. Das Flächenfilter 7 arbeitet zweidimensional, so daß keine Abhängigkeit der Anhebung von der Orientierung der Kontur besteht.

Die codierte Materialinformation durchläuft zur Rauschreduktion das Flächenfilter 8. Im einfachsten Falle wird dies durch Mittelwertbildung mehrerer Bildpunkte erreicht.

Die so gefilterten Signale steuern die Farbzuordnertabelle 9 (look-up-table).

Die Anzahl der in der Farbzuordnertabelle 9 abgelegten Kennlinien entspricht der Anzahl der codierten Zustände der Materialinformation. Jedem dieser Codes wird eine Farbe zugeordnet, d.h. Rot-, Grün- und Blauausgänge weisen ein bestimmtes Verhältnis zueinander auf. Die Farbübergänge sind kontinuierlich. Das Luminanzsignal steuert den Weißanteil und die Farbsättigung so, daß das Bild weiß wird, wenn keine Absorption vorliegt. Mit größer werdender Absorption nimmt die Farbsättigung zu. Bei sehr hoher Absorption wird zusätzlich die Bildhelligkeit sukzessive verringert, bis das Bild grau wird, wenn keine sichere Materialinformation über die Farbdarstellung mehr ausgegeben werden kann. Wird das Luminanzsignal Null, so erreicht auch die Bildhelligkeit im Regelfall ein Minimum. Dies zeigen die Fig. 4 und 5, in denen der Verlauf der Farbsättigung bzw. der Helligkeit der Farbwiedergabe in Abhängigkeit vom Luminanzsignal aufgezeichnet ist.

Durch die beschriebene Materialprüfanlage werden folgende Forderungen erfüllt:
- Der Erhalt der Konturen und damit der wichtigen Information über die Umrisse im Prüfgut enthaltener Gegenstände ist gesichert.
- Die Unterscheidung der Materialgruppen wird verbessert. Mindestens drei Materialgruppen können unterschieden werden. Dabei sind die Übergänge gleitend.
- Es tritt kein Verlust an der Durchdringungsfähigkeit auf. Selbst wenn auf Grund zu kleiner Signalamplituden keine Aussage über das Material möglich ist, werden die Konturen in monochromer Darstellung abgebildet.
- Die Farbdarstellung erfolgt nur, wenn Information über die Materialzugehörigkeit extrahiert werden kann.

**Patentansprüche**

1. Materialprüfanlage mit einer Transportstrecke (3a) für das Prüfgut (3), auf deren einer Seite ein Strahler (1) für durchdringende Strahlung und auf deren anderer Seite ein Strahlendetektor (4) angeordnet ist, der von einer Reihe von Einzeldetektoren (4a, 4b usw.) gebildet ist, sowie mit einer den Einzeldetektoren (4a, 4b usw.) nachgeschalteten Signalverarbeitungsschaltung (5 bis 11a, b), die einen Monitor (11a, b) zur bildlichen Wiedergabe des Inhaltes des Prüfgutes (3) enthält, **dadurch gekennzeichnet,** daß Mittel (1, 1a) zur Durchstrahlung des Prüfgutes (3) mit unterschiedlichen Strahlenenergien vorhanden sind, daß die Signalverarbeitungsschaltung (5 bis 11a, b) zwei Kanäle, und zwar ein niederenergetischer Kanal (B) und ein höherenergetischer Kanal (A), zur Bildung einer Materialinformation und eines Luminanzsignales aufweist, wobei die Farbe des Monitorbildes durch die Materialinformation und die Bildhelligkeit, die Farbsättigung und der Weißanteil durch das Luminanzsignal gesteuert werden, und daß das Luminanzsignal so synthetisiert wird, daß im Bereich niedriger Absorption vorwiegend Anteile des niederenergetischen Kanales und im Bereich höherer Absorption zunehmend das Signal des höherenergetischen Kanales benutzt wird.

2. Materialprüfanlage nach Anspruch 1, **dadurch gekennzeichnet,** daß die Materialinformation und das Luminanzsignal unterschiedliche Filter (7, 8) zur Rauschreduktion bzw. Kantenanhebung durchlaufen.

**Claims**

1. Material inspection system having a conveyor path (3a) for the article to be inspected (3), on one side of which there is arranged a radiation source (1) for penetrating radiation and on the other side of which there is arranged a radiation detector (4) which is formed by a series of individual detectors (4a, 4b etc), and having a signal processing circuit (5 to 11a, b) connected in series with the individual detectors (4a, 4b etc), which contains a monitor (11a, b) for the image reproduction of the content of the article to be inspected (3), characterised in that there are means (1, 1a) for irradiating the article to be inspected (3) with different radiation energies, in that the signal processing circuit (5 to 11a, b) has two channels, a low energy channel (B) and a high energy channel (A), for generating material information and a luminance signal, the colour of the monitor image being controlled by the material information, and the image brightness, the colour saturation and the white content being controlled by the luminance signal, and in that the luminance signal is synthesised so that in the range of low absorption parts of the low energy channel are predominantly used, and in the range of higher absorption increasingly the signal of the higher energy channel is predominantly used.

2. Material inspection system according to claim 1, characterised in that the material information and the luminance signal pass through different filters (7, 8) for noise reduction or edge boosting.

**Revendications**

1. Installation de contrôle de matériaux comportant une section de transport (3a) pour le matériau à contrôler (3), d'un côté de laquelle est disposé un émetteur (11) délivrant un rayonnement traversant et de l'autre côté de laquelle est disposé un détecteur de rayonnement (4) qui est formé par une série de détecteurs individuels (4a,4b, etc.), ainsi qu'un circuit (5 à 11a, b) de traitement de signaux, qui est branché en aval des détecteurs individuels (4a,4b, etc.) et qui comporte un moniteur (11a,b) pour la reproduction, sous forme d'une image, du contenu du matériau à contrôler (3), caractérisé par le fait qu'il est prévu des moyens (1,1a) pour irradier le matériau à contrôler (3) avec des énergies de rayonnement différentes, que le circuit (5 à 11a, b) de traitement des signaux comporte deux canaux, à savoir un canal à faible énergie (B) et un canal à énergie supérieure (A), pour la formation d'une information sur le matériau et un signal de luminance, la couleur de l'image du moniteur étant commandée par l'information concernant le matériau, tandis que la luminosité de l'image, la saturation de la couleur et la composante de blanc sont commandées par le signal de luminance, et que le signal de luminance est synthétisé de telle sorte que des composantes du canal de faible énergie sont utilisées de façon prépondérante dans la gamme de la zone de faible absorption et que le signal du canal à énergie supérieure est utilisé de façon croissante dans la zone d'absorption supérieure.

2. Installation de contrôle suivant la revendication 1, caractérisée par le fait que l'information sur le matériau et le signal de luminance traverse différents filtres (7,8) servant à réduire le bruit et à intensifier les bords.

FIG 1

C=f₁(A/B)

$C = f_1(A/B)$

(Atomgewicht)

30

20

10

0

1.0    1.1    A:B

FIG 2

$D = f_2(A) + f_3(B)$

$f_3(B)$

$f_2(A)$

A:B

FIG 3

Farbsättigung

max.

Luminanzsignal    1

FIG 4

Helligkeit der
Farbwiedergabe

max.

Luminanzsignal    1

FIG 5

5